Europäisches Patentamt

European Patent Office

Office européen des brevets

(11) Publication number: **0 078 326**
**B1**

# EUROPEAN PATENT SPECIFICATION

(45) Date of publication of patent specification: **10.10.90**

(21) Application number: **82901432.3**

(22) Date of filing: **14.05.82**

(86) International application number:
**PCT/JP82/00168**

(87) International publication number:
**WO 82/04136 25.11.82 Gazette 82/28**

(51) Int. Cl.⁵: **G 05 B 19/403, G 07 C 11/00**

(54) NUMERICAL CONTROL SYSTEM.

(30) Priority: **14.05.81 JP 72831/81**

(43) Date of publication of application:
**11.05.83 Bulletin 83/19**

(45) Publication of the grant of the patent:
**10.10.90 Bulletin 90/41**

(84) Designated Contracting States:
**DE FR GB**

(56) References cited:
**EP-A-0 027 317**
**EP-A-0 067 875**
**JP-A-54 117 883**
**JP-A-54 146 942**
**US-A-4 118 776**

**TRS-80 MODEL II, OPERATION MANUAL, 1st edition, 1979, pages 1/12 - 1/15, Fort Worth, US; "File specification"**
**TRS-80 Model II Operation Manual, edited 1979, pages 1/12; 1/14; 1/15; 2/9; 2/10; 2/53**

(73) Proprietor: **FANUC LTD.**
**3580, Shibokusa, Aza Komanba, Oshinomura Minamitsuru-gun, Yamanashi 401-05 (JP)**

(72) Inventor: **NOZAWA, Ryoichiro**
**12-1-2105, Sarugaku-cho Shibuya-ku Tokyo 150 (JP)**
Inventor: **KIYA, Nobuyuki**
**Yokokawacho-Jutaku 13-106 108 Yokokawa-cho Hachioji-shi Tokyo 193 (JP)**

(74) Representative: **Billington, Lawrence Emlyn et al**
**HASELTINE LAKE & CO Hazlitt House 28 Southampton Buildings Chancery Lane London WC2A 1AT (GB)**

Courier Press, Leamington Spa, England.

## Description

This invention relates to a numerical control system and, more particularly, to a numerical control system well-suited for application to a numerical control device for performing machining or processing using a subprogram or a so-called "user macro".

With the development and greater economy of microcomputers and minicomputers, it has become possible to make use of computer numerical control devices, or CNCs, in which a micro— or minicomputer is utilized as the operational control unit. These CNCs make it possible to change an NC function by changing the internal control program, and are advantageous in that they provide faster operation and high precision.

A numerical control device (referred to as an NC) generally executes numerical control processing on the basis of a command program specified by a paper tape or the like, and causes machining to be performed as commanded by driving a machine tool in accordance with the results of processing. This is referred to as the tape mode.

Recent NCs include a processor (CPU), a control program memory and a data memory, and thus have the construction of a computer. They are so adapted that the processor executes predetermined numerical control processing on the basis of a control program and NC program to effect the control of a machine tool. In an NC having the construction of a computer (referred to as a computer NC hereinafter), an operating method that has won popularity is a so-called memory mode method for facilitating editing such as NC program modification, addition and deletion, or for achieving processing at higher speeds. In the memory mode operating method, a variety of NC programs are stored beforehand in an internal memory and, in actual processing for machining control or the like, the processing is performed by reading predetermined NC programs out of the memory in successive fashion.

In instances where there is a fixed machining sequence or a shape produced by repeating the same pattern when carrying out machining in the above described tape mode and memory mode operating methods, a system is available wherein the sequence or shape is stored in the memory beforehand as a subprogram, a call instruction for calling a predetermined subprogram is inserted in the NC program, and the predetermined subprogram is called when required to execute numerical control. Using the subprogram method is convenient since the NC program can be greatly simplified.

A processing method employing a user macro also is available. A user macro allows the execution of predetermined processing that is based on the status of the machine tool or numerical control device. Specifically, the conventional command program is made up of move commands, speed commands, miscellaneous function instructions specifying predetermined machine actions for a machine tool, S—function instructions specifying spindle speed, T—function instructions specifying tool exchange, and preparatory function instructions. Instructions for executing processing based on the status of the machine tool or NC cannot be inserted in the conventional NC program. Recently, however, there is growing demand for improvement in NC function and a need for a capability wherein processing, in accordance with the status of the machine tool or NC, can be commanded from the NC program. In addition, though the software for a computer NC is designed for standard machine tool control, there are cases where special machine tool control is necessary depending upon the type of machine tool or upon the particular user, even for machine tools of the same kind. Thus there is a requirement for allowing special processing, tailored to the user's needs, to be instructed by means of the NC program without effecting any change in software. For the foregoing reasons, a control system based on a user macro has become available for use. With a user macro, a certain function composed of a group of instructions is stored in memory beforehand in the manner of a subprogram, and a call instruction for calling the user macro from memory is inserted in the NC program, whereby a predetermined user macro may be called from memory when required to execute numerically controlled processing.

Thus, recent NCs usually rely upon a memory mode operating method, and those that possess subprogam and user macro functions are increasing in number; (See e.g. US-A-4118 776.) The subprograms and user macros are prepared by machine makers (intermediate users) and are then stored in the internal memory of the NC. The end user need not have detailed knowledge of the subprogram or user macro content, but need only know the method of putting it to use. The creation of subprograms and user macros requires considerable labour and depends largely on the know-how of the intermediate user. It is generally desirable, therefore, that the content of the subprogram or user macro not be disclosed publicly. Another consideration is that an operating error on the part of the end user can destroy the subprogram or user macro. Since reproduction of the program or macro is extremely difficult, the stored data must be sufficiently protected against such destruction.

EP-A3-0 027 317 discloses a numerically controlled machine tool which has a programmable sequence controller with a non-volatile memory, divided into two areas for storing operation commands. The contents of the two areas are compared following a power interruption, to detect uncompleted commands.

EP-A1-0 067 875 constitutes prior art for the present application under Article 54(3) EPC only. It discloses a method for preventing execution of a miscopied program, in which a code stored with the program is compared with a code preset for a particular numerical control system.

EP-A2-0 005 179 discloses a data communication system in which a number of terminals are linked to a host computer. A multi-stage identification process involving encrypted passwords is employed to prevent unauthorised access to the system.

The TRS-80 Model II Operation Manual discloses a disk operating system for a microcomputer in which a file specification is given to a file to be stored on a disk. The file specification can include a password set by the user for protecting the file from unauthorised access.

Various types of password allowing different degrees of access are provided, including a type "EXEC" which allows a file to be executed only.

According to the present invention, there is provided a numerical control system, comprising:

a first memory storing control data; and means for displaying and/or editing the control data,

said control data including at least one user macro or subprogram and an NC program including a call instruction for the user macro or subprogram; characterised by:

a second memory separate from said first memory and storing a secret code associated with the user macro or subprogram and chosen by the system manufacturer;

portable non-volatile storage means for long term storage of said control data together with the secret code, said control data and secret code being transferred together, when electric power is introduced to the system, from said storage means to said first and second memories respectively;

input means for entering an input code;

comparison means for comparing said input code with said secret code; and

control means responsive to the result of comparison by said comparison means;

wherein, in use, when the user macro or subprogram is already stored in said first memory, and the secret code is already stored in said second memory, said input code is entered using the input means, and said comparison means and control means operate so that if said input code and secret code match, displaying and/or editing of the user macro or subprogram is enabled in addition to execution of the same; whereas if said input code and secret code do not match, displaying and/or editing of the user macro or subprogram is disabled but execution remains enabled.

Thus the present invention may provide a numerical control system capable of preventing both the disclosure (display) of user macros and subprograms and the accidental destruction of previously stored user macros and subprograms.

Through such an arrangement, the end user is not capable of viewing the user macro or subprogram content without entering a code that agrees with the stored secret code, and therefore may not divulge such contents to other parties. Furthermore, so long as there is no entry of the code agreeing with the secret code, the state in which the user macro or subprogram is stored is protected so that the macro or program cannot be destroyed.

Reference is made, by way of example, to the accompanying drawings in which:

Fig. 1 is a block diagram of a computer numerical control device, or CNC, to which the present invention can be applied;

Fig. 2 is an explanatory view of an NC program which includes a user macro call instruction; and

Fig. 3 is a block diagram of a numerical control system embodying the present invention.

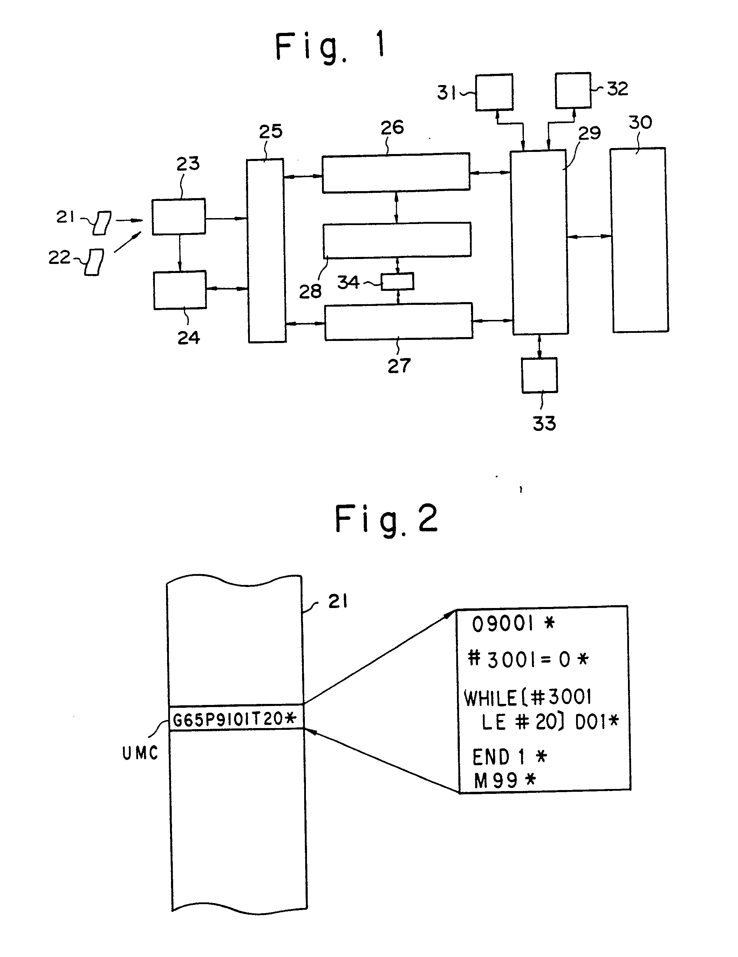

Fig. 1 is a block diagram of a CNC to which the present invention can be applied.

In Fig. 1, numeral 21 denotes an NC command tape bearing a punched NC command program, and 22 denotes a user macro command tape bearing one or a plurality of user macros. Each user macro consists of at least (1) a macro identification (09001, by way of example) and (2) an instruction using system variables, described below. Also, by way of example, M99 * (where * means "end of block" and M99 means the end of the macro) is programmed to follow the above mentioned instruction. The following is an example of a user macro, where i (i = 3001, 20) represents a system variable:

09001 *

#3001 = 0*
WHILE [#3001 LE 20] DO1
END 1 *
M99 *

The command tape 21, in addition to ordinary commands, is also programmed to include a user macro call instruction UMC, as shown in Fig. 2, wherein a predetermined user macro is called when required to permit processing in accordance with said user macro. The use macro call instruction includes, by way of example, at least G65 (a G-function instruction for calling the user macro), and P□□...□ (where P is a word address indicating that □...□is a macro identification, and □...□is the macro identification). Numeral 23 denotes a paper tape reader for reading the commands punched in the paper tapes 21, 22. A memory 24 stores the user macros and NC command program. This memory stores a plurality of user macros read from the user macro commanded tape 22, and the NC program read from the NC command tape 21. Numeral 25 denotes an input and discrimination circuit which, when the user macros and NC program are stored, is operable to transfer the information read in by the tape reader 23 to the memory 24 and to store the information there. When a command in the NC program read from the memory at the time of operation is an ordinary command, the circuit 25 sends this command to a subsequent unit for ordinary processing. When the command is a user macro call instruction, the circuit 24 reads the corresponding user macro out of the memory 24 and sends it to a subsequent unit for user macro processing. Numeral 26 designates an ordinary processing unit, and 27 a user macro processing unit, each of which units incorporate a processor, controller, memory and the like. It should be noted that these processing units may be constructed as one, common unit.

Numeral 28 denotes a variable memory. When a plurality of system variables are prepared for converting the various states and status quantities of a machine or numerical control device into variable values, the variable values of the system variables are stored in memory 28. A system variable is represented by #i. It should be noted that i is a variable number by which various system variables may be distinguished. The variable memory 28 is so designed as to be capable of referring to both the ordinary processing unit 26 and user macro processing unit 27. It is also possible to change each of the variable values at will.

Numeral 29 denotes an interface circuit for interfacing inputs and outputs among a machine tool, display unit, taper puncher, etc. Numeral 30 denotes the machine tool, 31 a manual data input MDI, 32 the display unit, and 33 an operator's panel. Designated at 34 is an address conversion unit for converting a variable number i into an address for the variable memory 28.

Let us assume that an NC command program and user macros have been stored in the memory 24. Predetermined NC processing is executed as each of the instructions making up the NC command program is read out of the memory 24 in successive fashion. When a command read in is an ordinary NC command, said NC command is applied as an input to the ordinary processing unit 26 whereby NC processing is executed in the same manner as the prior art. When the command is a macro call instruction, the input and discrimination circuit 25 calls the corresponding user macro from the memory 24 which stores the user macro and applies it as an input to the user macro processing unit 27 so that user macro processing may be performed.

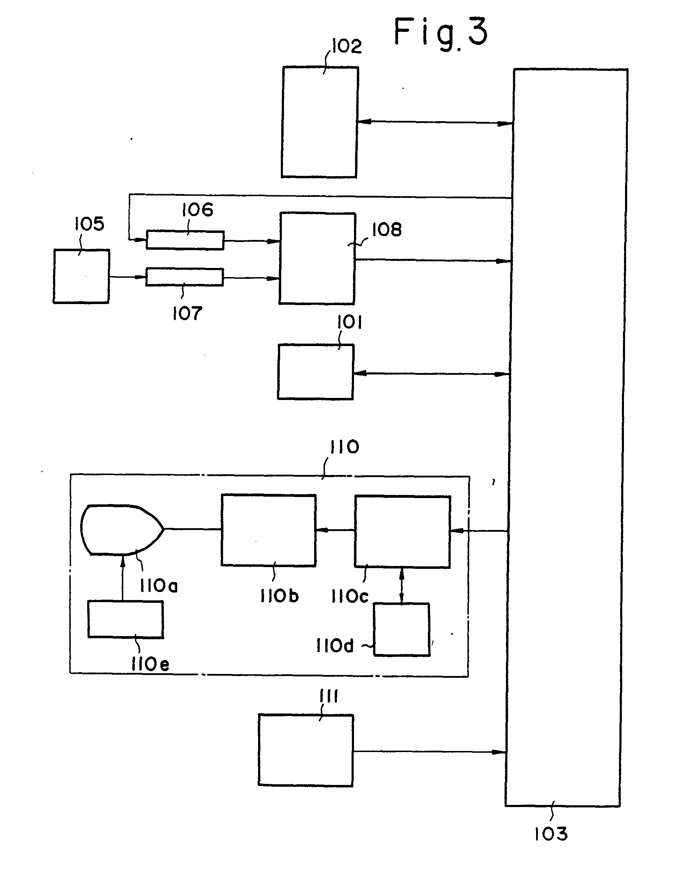

Fig. 3 is a block diagram illustrating a numerical control system embodying the present invention.

In Fig. 3, numeral 101 denotes a bubble memory in which there are previously stored user macros, subprograms, an NC command program, such parameters as acceleration/deceleration time constants and rapid traverse speed, and a secret code described below. Numeral 102 denotes a quick-access semiconductor memory to which, e.g., user macros, subprograms, and an NC command program are transferred from the bubble memory following the introduction of electric power. Numeral 103 denotes a processor, 105 an MDI, and 106 a register for storing, following the introduction of electric power, a registered secret code stored previously in the bubble memory 101. Numeral 107 denotes a register for storing a secret code entered by the MDI, 108 a comparator for discriminating whether the secret codes stored in the registers 106, 1078 agree with each other, and 110 a display unit which includes a CRT 110a, a display memory 110b, a display control unit 110c, a character generator 110d, and a deflection control circuit 110e. Numeral 111 denotes an operator's panel on which there are mounted various control switches such as a mode selection switch, and various buttons such as a cycle start button.

When electric power is introduced from the power supply, user macros, subprograms, an NC program, etc., are transferred to the semiconductor memory 102, while the stored secret code is transferred to the register 106. It should be noted that the intermediate user stores the secret code in the bubble memory 101 beforehand, and that the instructions in the user macros and subprograms will not be displayed by the display unit 110 as long as the code entered by the MDI 105 fails to agree with the stored secret code. It goes without saying that the secret code itself is not displayed by the display unit 110.

When the mode selection switch on the operator's panel 111 is switched to the memory operation mode and the cycle start button on the operator's panel is depressed, the instructions in the NC command program are read into the processor 103 successively from the semiconductor memory 102, and NC processing begins. If a program display button among function buttons (not shown) on the MDI is depressed at this time, then, from the NC command program, there will be a display of the block currently being processed, or of instructions in a block whose processing has been completed and in a block subsequent thereto, or of a plurality of blocks including the block currently being processed. When a user macro call instruction or subprogram call instruction is called from the semiconductor memory 102, therefore, the instruction will be displayed on the CRT 110a of the display unit 110. The content of the user macro or subprogram will not be displayed, however, as long as there is no coincidence between the stored secret code and the code from the MDI 105. Specifically, the comparator 108 compares the contents of registers 106, 107 at all times and applies the result of the comparison to the processor 103. When this input to the processor 103 is a non-coincidence signal, therefore, the processor does not deliver the instructions constituting the user macro or subprogram to the display unit 110, so that the content thereof cannot be displayed. Only when the input signal is a coincidence signal will the instruction codes be delivered to the display unit 110 to be displayed on the CRT 110a along with the NC command program. Because the secret code will be known only to the intermediate user (machine maker), the end user will not be capable of entering the registered code from the MDI. Accordingly, when an end user is having NC processing performed, the contents of the user macros and subprograms are never displayed and, hence, are never divulged to the end user or to anyone else.

The foregoing deals with the memory operation mode. Control is performed in the same manner, however, even in a case where the NC command program is to be edited or changed. More specifically, when the mode selection switch on the operator's panel 111 is placed in the EDIT mode and the program display button on the MDI is depressed, several blocks, including the current command program instructions, are displayed. If an UP button or DOWN button on the MDI is depressed under these conditions, then the processor 103 looks at the NC program in either the positive or negative direction starting from the current location of the semiconductor memory 102, and displays the contents of the NC program on the CRT 110a in successive fashion. The contents of the user macros or subprograms are not displayed, however, barring coincidence between the registered secret code and the code which enters from the MDI 105.

In the editing mode, instructions in the NC command program may be deleted or changed, or instructions may be added. As long as the comparator 108 fails to produce a coincidence signal, however, the processor 103 protects the contents of the storage areas containing the user macros and subprograms and does not write new data into these storage areas. In consequence, the user macros and subprograms cannot be destroyed by operator error.

In an embodiment of the invention as described hereinabove, in the absense of an input code which agrees with a registered secret code, an end user cannot see the contents of a user macro or subprogram so that these contents cannot be divulged to other parties. Also, the status of a stored user macro or subprogram is protected and beyond destruction as long as there is no input of a code agreeing with the registered secret code.

According to the foregoing description, a single secret code is stored in a non-volatile memory (bubble memory) for all the user macros and subprograms. However, an arrangement may be adopted wherein a separate secret code is stored for each user macro and subprogram. Further, it has been described that the secret code is stored beforehand in the non-volatile memory. This may be done at the same time that the user macros or subprograms are stored. In addition, the content of the secret code, the method of comparing the secret code, and the method of storing the same are capable of being modified in various ways.

As set forth hereinabove, it is possible to prevent user macros and subprograms from being divulged to the end user, and to prevent the accidental destruction of previously stored user macros and subprograms, etc. The invention therefore has great industrial applicability as it allows numerical control devices of the above type to operate in a reliable manner.

## Claims

1. A numerical control system, comprising:
a first memory (102) storing control data; and means (110, 111) for displaying and/or editing the control data,
said control data including at least one user macro or subprogram; and an NC program including a call instruction for the user macro or subprogram; characterised by:
a second memory (106), separate from said first memory (102) and storing a secret code associated with the user macro or subprogram and chosen by the system manufacturer;
portable non-volatile storage means (101) for long-term storage of said control data together with the secret code, said control data and secret code being transferred together, when electric power is introduced to the system, from said storage means (101) to said first and second memories (102, 106) respectively;
input means (105, 107) for entering an input code;
comparison means (108) for comparing said input code with said secret code; and
control means (103) responsive to the result of comparison by said comparison means (108);
wherein, in use, when the user macro or subprogram is already stored in said first memory, and the secret code is already stored in said second memory, said input code is entered using the input means, and said comparison means and control means operate so that if said input code and secret code match, displaying and/or editing of the user macro or subprogram is enabled in addition to execution of the same; whereas if said input code and secret code do not match, displaying and/or editing of the user macro or subprogram is disabled but execution remains enabled.

2. A numerical control system as claimed in claim 1, wherein said means for displaying and/or editing (110, 111) comprises a display unit (110), said control means (103) being operable to read said call instruction for the user macro or subprogram from said first memory (102), and to display said call instruction on said display (110) regardless of whether the input code and secret code match.

3. A numerical control system as claimed in claim 1 or 2, wherein said control data comprises a plurality of user macros and/or subprograms.

4. A numerical control system as claimed in claim 3, wherein the same secret code is associated with each of the user macros and/or subprograms.

5. A numerical control system as claimed in claim 3, wherein a different respective said secret code is associated with each of the user macros and/or subprograms.

6. A numerical control system as claimed in any preceding claim, wherein said control means (103) is operable to prevent editing of the or each user macro or subprograms by inhibiting writing of new data to one or more areas of said first memory (102) storing the or each user macro or subprogram.

7. A numerical control system as claimed in any preceding claim, wherein said first memory (102) is a quick-access semiconductor memory.

8. A numerical control system as claimed in any preceding claim, wherein said second memory (106) is a non-volatile memory.

9. A numerical control system as claimed in any preceding claim, wherein said second memory (106) comprises a register.

10. A numerical control system as claimed in any preceding claim, wherein said input means (105, 107) comprises a register.

11. A numerical control system as claimed in any preceding claim, wherein said portable non-volatile storage means (101) is a bubble memory.

12. A numerical control system as claimed in any preceding claim, wherein said means for displaying and/or editing (110, 111) comprises a CRT (110a), a display memory (110b), a display control unit (110c), a character generator (110d), and a deflection control circuit (110e).

13. A numerical control system as claimed in any preceding claim, wherein said means for displaying and/or editing (110, 111) comprises a control panel (111) including a mode selection switch operable to set an EDIT mode of the system.

## Patentansprüche

1. Numerisches Steuersystem mit
einem ersten Speicher (102), der Steuerdaten speichert, und
Mitteln (110, 111) zum Anzeigen und/oder Aufbereiten der Steuerdaten,
wobei die Steuerdaten zumindest ein Benutzer-Makro- oder Unterprogramm und ein numerisches Steuer- (NC-)Programm, das einen Aufrufbefehl für das Benutzer-Makro- oder Unterprogramm in sich aufweist, enthalten, gekennzeichnet durch
einen zweiten Speicher (106), der von dem ersten Speicher (102) getrennt angeordnet ist und einen Geheimcode speichert, der dem Benutzer-Makro- oder Unterprogramm zugeordnet und durch den Systemhersteller ausgewählt ist,
ein tragbares nichtflüchtiges Speichermittel (101) zur Langzeitspeicherung der Steuerdaten zusammen mit dem Geheimcode, wobei die Steuerdaten und der Geheimcode, wenn die elektrische Stromversorgung für das System eingeschaltet wird, zusammen von dem Speichermittel (101) zu dem ersten bzw. zu dem zweiten Speicher (102, 106) übertragen werden,
Eingabemittel (105, 107) zum Eingeben eines Eingabecode,
ein Vergleichsmittel (108) zum Vergleichen des Eingabecode mit dem Geheimcode und
ein Steuermittel (103), das auf das Vergleichsergebnis des Vergleichsmittels (108) anspricht,
wobei im Betrieb, wenn das Benutzer-Makro- oder Unterprogramm bereits in dem ersten Speicher gespeichert ist und der Geheimcode bereits in dem zweiten Speicher gespeichert ist, der Eingabecode unter Benutzung der Eingabemittel eingegeben wird und das Vergleichsmittel und das Steuermittel derart arbeiten, daß wenn der Eingabecode und der Geheimcode zusammenpassen, ein Anzeigen und/oder Aufbereiten des Benutzer-Makro- oder Unterprogramms zusätzlich zur Ausführung derselben freigegeben wird, wohingegen, wenn der Eingabecode und der Geheimcode nicht zusammenpassen, das Anzeigen und/oder Aufbereiten des Benutzer-Makro-oder Unterprogramms gesperrt wird, jedoch die Ausführung freigegeben bleibt.

2. Numerisches Steuersystem nach Anspruch 1, bei dem die Mittel zum Anzeigen und/oder Aufbereiten (110, 111) eine Anzeigeeinheit (110) umfassen und bei dem das Steuermittel (103) betreibbar ist, um den Aufrufbefehl für das Benutzer-Makro- oder Unterprogramm aus dem ersten Speicher (102) auszulesen und den Aufrufbefehl auf dem Bildschirm der Anzeigeeinheit (110) ohne Rücksicht darauf anzuzeigen, ob der Eingabecode und der Geheimcode zusammenpassen oder nicht zusammenpassen.

3. Numerisches Steuersystem nach Anspruch 1 oder 2, bei dem die Steuerdaten eine Vielzahl von Benutzer-Makro- und/oder Unterprogrammen umfassen.

4. Numerisches Steuersystem nach Anspruch 3, bei dem der Geheimcode jedem der Benutzer-Makro- nd/oder Unterprogramme zugeordnet ist.

5. Numerisches Steuersystem nach Anspruch 3, bei dem jedem der Benutzer-Makro- und/oder Unterprogramme ein unterschiedlicher betreffender Geheimcode zugeordnet ist.

6. Numerisches Steuersystem nach einem der vorhergehenden Ansprüche, bei dem das Steuermittel (103) betreibbar ist, um ein Aufbereiten des oder jedes Benutzer-Makro- oder Unterprogramms durch Sperren des Einschreibens neuer Daten in einen oder mehrere Bereiche des ersten Speichers (102), der das oder jedes Benutzer-Makro- oder Unterprogramm speichert, zu verhindern.

7. Numerisches Steuersystem nach einem der vorhergehenden Ansprüche, bei dem der erste Speicher (102) ein Schnellzugriffs-Halbleiterspeicher ist.

8. Numerisches Steuersystem nach einem der vorhergehenden Ansprüche, bei dem der zweite Speicher (106) ein nichtflüchtiger Speicher ist.

9. Numerisches Steuersystem nach einem der vorhergehenden Ansprüche, bei dem der zweite Speicher (106) ein Register oder Zählwerk umfaßt.

10. Numerisches Steuersystem nach einem der vorhergehenden Ansprüche, bei dem die Eingabemittel (105, 107) ein Register oder Zählwerk umfassen.

11. Numerisches Steuersystem nach einem der vorhergehenden Ansprüche, bei dem das tragbare nichtflüchtige Speichermittel (101) ein Blasenspeicher ist.

12. Numerisches Steuersystem nach einem der vorhergehenden Ansprüche, bei dem die Mittel zum Anzeigen und/oder Aufbereiten (110, 111) eine Katodenstrahlröhre CRT (110a), einen Anzeigespeicher (110b), eine Anzeigesteuereinheit (110c), einen Zeichengenerator (110d) und eine Ablenksteuerschaltung (110e) umfassen.

13. Numerisches Steuersystem nach einem der vorhergehenden Ansprüche, bei dem die Mittel zum Anzeigen und/oder Aufbereiten (110, 111) ein Bedienungsfeld (111) umfassen, das einen Betriebsart-Auswahlschalter enthält, der betätigbar ist, um eine EDIT-Betriebsart des Systems einzustellen.

## Revendications

1. Un système de commande numérique comprenant:

une première mémoire (102) stockant les données de commande et un moyen (110, 111) servant à afficher et/ou à éditer les données de commande,

ladite donnée de commande comprenant au moins un macro-utilisateur ou sous-programme et un programme CN comprenant une instruction d'appel pour le macro-utilisateur ou sous-programme, caractérisé par:

une deuxième mémoire (106), séparée de ladite première mémoire (102) et mémorisant un code secret associé au macro-utilisateur ou sous-programme et choisi par le fabriquant du système;

un moyen de stockage portable non-volatile (101) pour le stockage à long terme de ladite donnée de commande en même temps que le code secret, lesdites données de commande et code secret étant transférés ensemble, lorsque l'alimentation électrique est introduite dans le système dudit moyen de stockage (101) vers lesdites première et deuxième mémoires (102, 106), respectivement;

un moyen d'entrée (105, 107) servant à entrer un code d'entrée;

un moyen de comparaison (108) servant à comparer ledit code d'entrée avec ledit code secret, et

un moyen de commande (103) sensible au résultat de la comparaison effectuée par ledit moyen de comparaison (108);

dans lequel, lors de l'utilisation, lorsque le macro-utilisateur ou sous-proramme est déjà stocké dans ladite première mémoire et lorsque le code secret est déjà stocké dans ladite deuxième mémoire, ledit code d'entrée est entré en utilisant le moyen d'entrée et dans lequel lesdits moyen de comparaison et moyen de commande fonctionnent de façon que, si lesdits code d'entrée et code secret s'accordent, l'affichage et/ou l'édition du macro-utilisateur ou sous-programme est validé en plus de l'exécution de celui-ci, tandis que, si lesdits code d'entrée et code secret ne s'accordent pas, l'affichage et/ou l'édition du macro-utilisateur ou sous-programme est invalidé mais l'exécution demeure validée.

2. Un système de commande numérique selon la revendication 1, dans lequel ledit moyen servant à afficher et/ou éditer (110, 111) comprend une unité d'affichage (110), ledit moyen de commande (103) pouvant être commandé pour extraire ladite instruction d'appel pour le macro-utilisateur ou sous-programme de ladite première mémoire (102) et pour afficher ladite instruction d'appel sur ledit affichage (110) sans tenir compte de ce que le code d'entrée et le code secret s'accordent.

3. Un système de commande numérique selon la revendication 1 ou 2, dans lequel ladite donnée de commande comprend une pluralité de macros-utilisateur et/ou sous-programmes.

4. Un système de commande numérique selon la revendication 3, dans lequel le même code secret est associé à chacun des macros-utilisateur et/ou sous-programmes.

5. Un système de commande numérique selon la revendication 3, dans lequel un code secret différent respectif est associé à chacun des macros-utilisateur et/ou sous-protrammes.

6. Un système de commande numérique selon l'une quelconque des revendications précédentes, dans lequel ledit moyen de commande (103) peut être commandé pour empêcher l'édition du ou de chaque macro-utilisateur ou sous-programme en interdisant l'écriture de nouvelles données vers une ou plusieurs zones de ladite première mémoire (102) stockant le ou chaque macro-utilisateur ou sous-programme.

7. Un système de commande numérique selon l'une quelconque des revendications précédentes, dans lequel ladite première mémoire (102) est une mémoire semi-conductrice à accès rapide.

8. Un système de commande numérique selon l'une quelconque des revendications précédentes, dans lequel ladite deuxième mémoire (106) est une mémoire non-volatile.

9. Un système de commande numérique selon l'une quelconque des revendications précédentes, dans lequel ladite deuxième mémoire (106) comprend un registre.

10. Un système de commande numérique selon l'une quelconque des revendications précédentes, dans lequel ledit moyen d'entrée (105, 107) comprend un registre.

11. Un système de commande numérique selon l'une quelconque des revendications précédentes, dans lequel ledit moyen de stockage portable non-volatile (101) est une mémoire à bulle.

12. Un système de commande numérique selon l'une quelconque des revendications précédentes, dans lequel ledit moyen servant à afficher et/ou à éditer (110, 111) comprend un écran à tube cathodique (110a), une mémoire d'affichage (110b), une unité de commande d'affichage (110c), un générateur de caractère (110d) et un circuit de commande de déviation (110e).

13. Un système de commande numérique selon l'une quelconque des revendications précédentes, dans lequel ledit moyen pour l'affichage et/ou l'édition (110, 111) comprend un panneau de commande (1110) incluant un commutateur de sélection de mode pouvant être commandé pour positionner un mode EDIT du système.

# Fig. 1

# Fig. 2

```
09001 *
# 3001 = 0 *
WHILE[#3001
  LE # 20] D01*
END 1 *
M99 *
```

G65P9101T20*

UMC

Fig.3